# EUROPÄISCHE PATENTSCHRIFT

(11) **EP 2 217 426 B1**
(45) Veröffentlichungstag und Bekanntmachung des Hinweises auf die Patenterteilung: **26.11.2014**
(21) Anmeldenummer: 08841803.3
(22) Anmeldetag: 22.10.2008
(51) Int. Cl.: B29C 47/10, B29C 47/92

(54) **VERFAHREN ZUR EXTRUSION VON KUNSTSTOFFMATERIAL SOWIE EXTRUDER**
METHOD FOR EXTRUDING PLASTIC MATERIAL AND EXTRUDER
PROCÉDÉ D'EXTRUSION DE MATIÈRE PLASTIQUE, ET EXTRUDEUSE

(30) Priorität: 22.10.2007 AT 17072007
(43) Veröffentlichungstag der Anmeldung: 18.08.2010
(73) Patentinhaber: EREMA Engineering Recycling Maschinen und Anlagen Gesellschaft m.b.H., 4052 Ansfelden (AT)
(72) Erfinder: FEICHTINGER, Klaus, A-4040 Linz (AT); WENDELIN, Gerhard, A-4030 Linz (AT); HACKL, Manfred, A-4040 Linz (AT); ECKHART, Christian, A-4020 Linz (AT)
(74) Vertreter: Wildhack, Andreas
(86) Internationale Anmeldenummer: PCT/AT2008/000385
(87) Internationale Veröffentlichungsnummer: WO 2009/052541

(56) Entgegenhaltungen:
- EP-A- 0 723 850
- AT-B- 387 182
- GB-A- 1 140 693
- GB-A- 2 301 795
- JP-A- 1 314 134
- US-A- 4 247 272
- US-A- 4 309 114
- US-A- 4 500 481
- US-A- 4 830 219
- US-A- 4 902 455
- US-A1- 2004 232 578

## Beschreibung

Die Erfindung betrifft ein Verfahren gemäß dem Oberbegriff des Patentanspruches 1 sowie einen Extruder gemäß dem Oberbegriff des Patentanspruches 8.

Aus der GB PS 1,140,693 ist es bekannt, die Beschickungsmenge eines Extruders durch den im Extruder herrschenden Druck zu regeln. Angaben, an welcher Stelle der Druck im Extruder zu messen ist, werden keine getroffen.

Aus der GB 2 301 795 A ist es bekannt, Sensoren vorzusehen, mit denen die Geschwindigkeit bzw, das Drehmoment der Extruderschnecken einstellbar ist, um bei konstantem Druck und/oder konstanter Temperatur extrudieren zu können.

Aus der US 4,500,481 A sind ein Verfahren bzw. ein Extruder der eingangs genannten Art bekannt. Einen derartigen Extruder ist eine Stopfschnecke vorgeordnet, die zur Erwärmung des dem Extruder zugeführten Kunststoffmaterials, nicht jedoch zur Regelung der Beschickungsmenge dient. Es erfolgt die Erwärmung von zugeführtem Kunststoffmaterial, um eine gleichmäßigere Extrusion zu erreichen, aber keine Regelung der Beschickungsmenge in Abhängigkeit eines Druckmesssignals.

Im Zuge des Regenerierens von Abfällen bzw. Produktionsabfällen aus Kunststoffmaterialien gibt es weite Bereiche innerhalb derer die Schüttdichte der Eingangsmaterialien, so wie dieser einer Beschickungsöffnung eines Extruders aufgegeben werden, stark schwanken. Zum Beispiel schwankt die Schüttdichte bei PET Flaschenmahlgut zwischen 200 kg/m³ und 600 kg/m³; bei PET-Folien schwankt die Schüttdichte zwischen 20 kg/m³ und 300 kg/m³.

Auch wenn dem Extruder Schneidverdichter oder Reaktoren oder Aufbereitungseinheiten vorgeordnet sind, kann die Schüttdichte nicht in allen Fällen vergleichmäßigt werden, derart, dass eine gleichförmige Beschickung der Extruderschnecke erreicht wird. Für die Auslegung einer Schnecke bzw. für den Extrusionsschritt sind die Schüttdichte bzw. der erzielte Schneckenfüllgrad eine maßgebliche Größe. Es ist zumeist nicht allzu schwierig, den Schneckenfüllungsgrad für eine gewisse Schüttdichte einzustellen und dadurch ein gutes Extrusionsergebnis zu erzielen. Es ist jedoch deutlich schwieriger, den Befüllungsgrad der Schnecke bei variabler bzw. schwankender Schüttdichte konstant zu halten und dadurch bei einer definierten Drehzahl der Schnecke bzw. einer gewünschten Dimension der Schnecke ein gutes Extrusionsergebnis wie zum Beispiel hoher gleichmäßiger Durchsatz, niedere Schmelzetemperatur, gute Homogenisierleistung, stabiler Druckaufbau der Schnecke, zu erzielen.

Bei bestimmten Vorgangsweisen bei der Aufbereitung von Kunststoffmaterialien ist es aus wirtschaftlicher Sicht erforderlich und aus technischer Sicht realisierbar, schnelilaufende Extruder einzusetzen, die einen relativ kleinen Schneckendurchmesser besitzen können. Mit solchen Einheiten kann man trotz kleinerer Schneckendurchmesser (kleinere Extruder) hohe Massedurchsätze erzielen und dadurch eine wirtschaftlichere Extrusionsmaschine bauen. Da das aufzubereitende Material in den meisten Fällen nicht in leichtfließender Granulatform dem Extruder zugeführt werden kann, ist es auch hier sinnvoll, Vorkehrungen zu treffen, um die Materialzufuhr zu der Extruderschnecke möglichst gleichmäßig zu halten. Gerade bei derartigen schnelllaufenden Schnecken ist es von Bedeutung, dass das zu extrudierende Kunststoffmaterial in ausreichender Menge zugeführt wird, da es bei einer ungenügend aufgefüllten Schnecke zu einer thermischen bzw. thermisch-oxidativen Überlastung des Kunststoffes kommen kann.

Diese Probleme werden erfindungsgemäß bei einem Verfahren der eingangs genannten Art mit den im Kennzeichen des Anspruches 1 angeführten Merkmalen gelöst.

Ein Extruder der eingangs genannten Art ist erfindungsgemäß mit den im Kennzeichen des Anspruches 8 angeführten Merkmalen charakterisiert.

Es zeigte sich, dass mit der erfindungsgemäßen Vorgangsweise die Schüttdichte bzw. der Füllungsgrad des Schneckengehäuses bzw. im Einzugsbereich der Extruderschnecke in einem Ausmaß konstant gehalten werden kann, dass der Befüllungsgrad der Schnecke in dem Bereich, in dem das aufzubereitende Kunststoffmaterial geschmolzen vorliegt, konstant bleibt. Der gewählte Messort des ersten Drucksignals bietet die Möglichkeit, exakte Messverhältnisse zu erreichen.

Es ist erfindungsgemäß möglich, die Materialzufuhr und/oder die Beschickungsmenge unabhängig voneinander einzuregeln bzw. aufeinander abzustimmen, indem die gemessenen Drucksignale entsprechend ausgewertet werden. Erfindungsgemäß können unterschiedliche Kunststoffmaterialien verarbeitet werden, ohne dass an die Art bzw. die Dimensionen der Schnecke große Anforderungen gestellt werden müssen. Damit wird es wiederum möglich, mit ein und demselben Extruder Kunststoffmaterialien unterschiedlicher Qualität und unterschiedlicher Zusammensetzung rasch und effektiv aufzuschmelzen und zu extrudieren, insbesondere wenn in Abhängigkeit des gemessenen Druckes die Drehzahl der zumindest einen Schnecke bemessen oder eingeregelt wird.

Die erfindungsgemäße Vorgangsweise berücksichtigt neben der Beschickungsmenge konkludent auch die Schüttdichte, das Rieselverhalten, das Fließverhalten und den Beschickungsdruck KSW des aufgegebenen Kunststoffmaterials.

Von Vorteil ist die Messung eines ersten Drucksignals entsprechend den Merkmalen des Anspruches 1. Dieses Druckmesssignal liefert exakte Werte über einen Beschickungsbedarf bzw. den Füllungsgrad der Schnecke. Es steht ausreichend Zeit zur Verfügung, um die Beschickungsmenge des Schneckengehäuses anzupassen bzw. abzuändern, um einen abfallenden oder ansteigenden Druck auszugleichen, ohne dass es zu nennenswerten Schwankungen der Temperatur bzw. des Druckes des aufgeschmolzenen Kunststoffmaterials kommt. Dieses Drucksignal kann auch dazu herangezogen werden, die Drehzahl der Schnecke einzuregeln; sofern ein Druckabfall festgestellt wird, kann die Drehzahl der Schnecke herabgefahren werden. Insbesondere durch eine Kombination der Erhöhung einer Beschickung bzw. dem Herabfahren der Schneckendrehzahl kann die Konstanz der Extrusion des aufgeschmolzenen Kunststoffmaterials weiter verbessert werden, insbesondere wenn dieses ausreichend zerkleinert, vorverdichtet oder aufbereitet ist

Gemäß dem Kennzeichnenden Teil des Anspruchs 1 ist vorgesehen, dass ein zweiter Druck zumindest an einer Stelle oder in einem Bereich im Gehäuse im Einzugsgebiet der Schnecke ermittelt wird, in dem die Schnecke einen gleichbleibenden Kerndurchmesser besitzt und/oder dass der zweite Druck an der Stelle oder in dem Bereich des Gehäuses gemessen wird, an der bzw. in dem das Kunststoffmaterial eine Temperatur besitzt, die seiner Vicat-Temperatur (T_{c}) ± 15% T_{c} entspricht, wobei gegebenenfalls das zweite Druckmesssignal, gegebenenfalls nach entsprechender Gewichtung, insbesondere zur Berücksichtigung von rasch erfolgenden Änderungen in der Beschickungsmenge, mit dem ersten Druckmesssignal verknüpft wird und das erste und zweite Druckmesssignal gemeinsam zur Regelung der Beschickung des Extruders und/oder Regelung der Drehzahl der Schnecke herangezogen werden. Damit wird ein zweites Druckmesssignal erhalten, mit dem die Genauigkeit der Beschickung erhöht werden kann. Es ist dabei zweckmäßig, wenn dem Extruder zur Regeneration vorgesehenes Kunststoffmaterial, insbesondere Kunststoffabfälle, aus einem Schneidverdichter oder Reaktor oder einem Vorratsbehälter in Abhängigkeit des ersten Druckmesssignals und gegebenenfalls des zweiten Druckmesssignals mengenmäßig geregelt zugeführt wird und/oder dass dem Kunststoffmaterial vor der Extrusion Pigmente, Zuschlagsstoffe, Füllstoffe, Fasern, Weichmacher und/oder Bleichmittel zugesetzt werden. bzw. wenn die Beschickungsmenge und/oder die Drehzahl der Schnecke in Abhängigkeit des ersten und gegebenenfalls des zweiten Druckmesssignals derart eingeregelt werden, dass im Gehäuse ein konstanter Befüllungsgrad und/oder eine konstante Schüttdichte erreicht oder eingestellt werden und/oder bei Feststellung eines abnehmenden Druckes die Beschickungsmenge erhöht und/oder die Drehzahl des Extruders verringert wird. Wenn derart vorgegangen wird, besteht ein vielfältiges Anwendungsspektrum und es können Unregelmäßigkeiten in der Beschickung des Extrudergehäuses rasch erfasst und ausgeglichen werden.

Die Anzahl der Stellen, an denen Druckmesssignale abgefühlt bzw. abgenommen werden, ist beliebig. Sofern für den ersten oder den zweiten Druckmesswert jeweils eine Mehrzahl von Sensoren zur Verfügung steht, so könnten die von den Sensoren abgegebenen Messwerte gemittelt oder gewichtet verknüpft werden. Insbesondere auch dazu ist eine Steuereinheit zur Auswertung der Druckmesssignale vorhanden, mit der die Beschickungseinheit des Extruders und/oder die Antriebseinheit für die Extruderschnecke geregelt werden. Entsprechend sind die Merkmale gemäß dem Anspruch 6 von Vorteil.

Es ist bei der erfindungsgemäßen Vorgangweise ohne weiteres möglich, dass dem Kunststoffmaterial vor der Extrusion Pigmente, Zuschlagsstoffe, Füllstoffe, Fasern, Weichmacher und/oder Bleichmittel zugesetzt werden.

Des weiteren spielt es keine Rolle, in welcher Form das Kunststoffmaterial vorliegt. Es kann sich dabei um Kunststoffschnitzel, Kunststofffolien, Kunststoffteile, Kunststoffgranulat bzw. um bereits aufbereitetes Kunststoffmaterial handeln, das beispielsweise aus einem Schneidverdichter oder Reaktor dem Extruder aufgegeben wird.

Vorteilhaft für einen einfachen robusten und betriebssicheren Aufbau ist es, wenn dem Extruder eine Liefereinheit für Kunststoffmaterial, z.B. ein Speicher oder ein Schneidverdichter oder Reaktor, vorgeschaltet ist und dass zwischen der Liefereinheit und dem Extruder die von der Steuereinheit geregelte Beschickungseinheit angeordnet ist.

Es ist auch möglich, dass als Beschickungseinheit des Extruders eine Förderschnecke oder eine Zellradschleuse vorgesehen sind, deren Abgabemenge insbesondere durch Steuerung oder Änderung ihrer Drehzahl in Abhängigkeit des gemessenen ersten Drucks durch die Steuereinheit veränderbar ist. Die zwischen einer derartigen Liefereinheit und dem Extruder angeordnete Beschickungseinheit ist eine Einheit, mit der die Aufgabe von Kunststoffmaterial an den Extruder geregelt erfolgen kann. In welcher Weise diese Regelung vorgenommen wird, ist nicht von allzu großer Bedeutung; es ist erforderlich, dass diese Regelung gut auf die von der Steuereinheit abgegebenen Steuersignale reagiert und relativ kurzfristig die Beschickung des Schneckengehäuses erhöht oder verringert werden kann. In entsprechender Weise sollte auch der Antrieb der Schnecke auf die von der Steuereinheit abgegebenen Steuersignale rasch ansprechen. Für eine einfache exakte Regelung ist es von Vorteil, wenn bei Feststellung eines abnehmenden Druckes die Beschickungsmenge erhöht und/oder die Drehzahl des Extruders verringert wird.

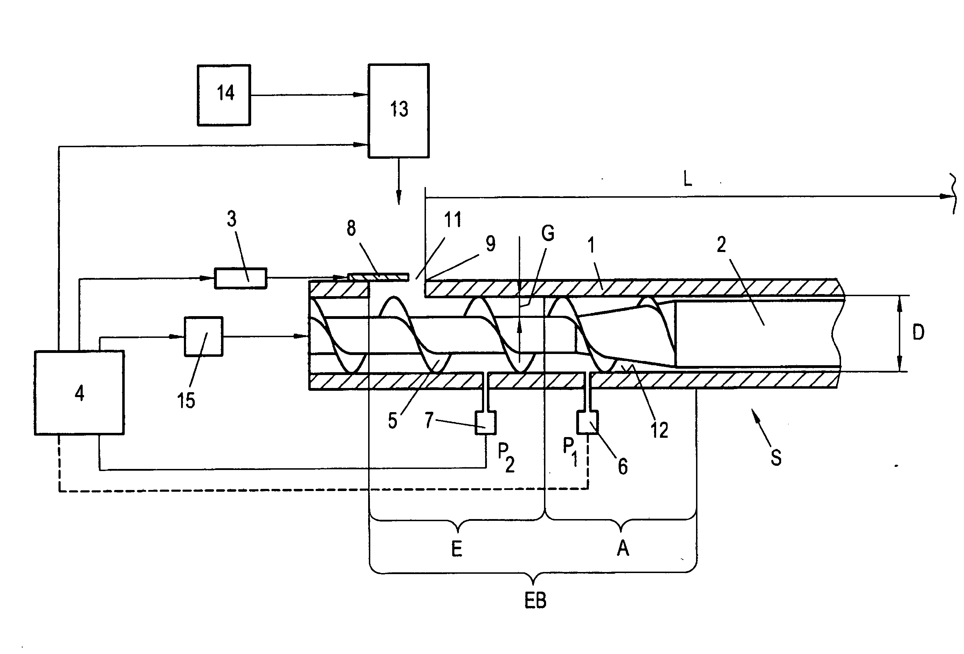

Im folgenden wird die Erfindung anhand der Zeichnung näher erläutert, in der schematisch ein Extruder mit entsprechenden angeschlossenen Einheiten dargestellt ist.

In einem Gehäuse 1 ist eine Extruderschnecke 2 rotierbar gelagert. Die Extruderschnecke 2 besitzt Schneckengänge, die mit 5 bezeichnet sind und eine entsprechende Gangtiefe G besitzen. Im Extrudergehäuse 1 ist eine Beschickungsöffnung 11 ausgebildet, durch die über eine schematisch dargestellte Beschickungseinheit 13 zu extrudierendes Kunststoffmaterial aufgeben werden kann. Der Beschickungseinheit 13 wird das Kunststoffmaterial von einer Liefereinheit 14, z.B. einem Speicher, einem Schneidverdichter oder einem Reaktor zugeführt. Die Zufuhr des Kunststoffmaterials von der Liefereinheit 14 zur Beschickungseinheit 13 bzw. von der Beschickungseinheit 13 zur Beschickungsöffnung 11 kann auf beliebige Weise erfolgen. Von Vorteil kann es sein, wenn die Materialaustragsöffnung der Beschickungseinheit 13 direkt an die Beschickungsöffnung 11 angeschlossen ist.

An der Innenwand des Gehäuses 1 sind im Einzugsbereich EB der Schnecke 2 Drucksensoren 6, 7 angeordnet, mit denen Druckmesssignale P₁, P₂ aufgenommen bzw. erhalten werden, die einer Steuereinheit 4 zugeführt sind. In Abhängigkeit dieser Drucksignale können von der Steuereinheit 4 eine Antriebseinheit 15 der Schnecke 2 zur Drehzahlregelung der Schnecke 2 und/oder die Beschickungseinheit 13 zur Einstellung der durch die Beschickungsöffnung 11 aufgegebene Kunststoffmenge angesteuert werden.

Die Anordnung der Druckmesssensoren 6, 7 erfolgt im Bereich EB bzw. an der Innenwandfläche 12 des Gehäuses 1, um den durch das von der Beschickungseinheit 13 aufgegebenen bzw. zu extrudierenden Material auf die Innenwandung 12 des Gehäuses 1 ausgeübten Druck zu messen.

Ein erster Druck P₁ wird an zumindest einer Stelle bzw. in einem Bereich A des Gehäuses 1 gemessen, an der bzw. in dem das Kunststoffmaterial agglomeriert bzw. erweicht und noch nicht, insbesondere noch nicht vollständig, aufgeschmolzen bzw. noch nicht homogen als Schmelze vorliegt, d.h. vorteilhafterweise am Anfang des Aufschmelzbereichs A. Der erste Druck P₁ wird somit in dem Bereich A des Gehäuses 1 ermittelt, in dem der Kerndurchmesser D der Schnecke 2 sich zu vergrößern bzw. die Gangtiefe G der Schnecke 2 abzunehmen beginnt.

Es ist von Vorteil, wenn zumindest eine zweite Druckmesseinheit 7 an einer Stelle bzw. in einem Bereich E des Gehäuses 1 angeordnet ist, in dem die Schnecke 2 einen gleichbleibenden Kerndurchmesser D besitzt.

In der Praxis zeigte es sich, dass es zweckmäßig ist, wenn der zweite Druck P₂ an der Stelle bzw. in dem Bereich E des Gehäuses 1 gemessen wird, an der bzw. in dem das Kunststoffmaterial eine Temperatur in dem Bereich besitzt, der durch die Vicat-Temperatur (T_{c}) ± 15% T_{c} vorgegeben ist.

Als Druckmesseinheiten werden Sensoren eingesetzt, die die auftretenden Temperaturen und allfällige Druckspitzen verkraften können, insbesondere piezoelektrische, piezorestriktive Systeme bzw. Systeme beruhend auf Dehnungsmessstreifen.

Mit dem gemessenen ersten Druckmesssignal P₁ wird erkannt, ob das zugeführte Kunststoffmaterial in dem Einzugsbereich A der Schnecke 2 bereits die entsprechende Konsistenz erhalten hat, d.h. nahezu, aber noch nicht vollständig, aufgeschmolzen bzw. noch nicht vollständig homogenisiert ist. Die Feststellung des Druckes in diesem Bereich gibt eine exakte Signalinformation über den Füllungsgrad des Einzugsbereiches EB der Schnecke 2 und der Schnecke 2 selbst. Das Signal der im Aufschmelzbereich A angeordneten Druckmesseinheit 6 wird somit als wesentliches Regelsignal für die Beschickungseinheit 13 bzw. den Antrieb 15 der Extruderschnecke 2 herangezogen.

Ergänzend kann das zweite Druckmesssignal P₂ herangezogen werden, das im Hinblick auf die schwankende Schüttdichte bzw. einen schwankenden Befüllungsgrad zeitlich relativ rasch veränderlich ist und deshalb mit dem ersten Druckmesssignal P₁ in der Steuereinheit 4 verknüpft werden kann.

Zweckmäßig ist es, wenn die Steuereinheit 4 einen Regler, insbesondere einen PID-Regler aufweist, welcher die Beschickungseinheit 13 bzw. den Antrieb 15 ansteuert.

Es ist für eine exakte Regelung von Vorteil, wenn insbesondere bei der Extrusion von Polyolefinen, das erste Druckmesssignal P₁ in einem Bereich von L=(1 bis 16)D, vorzugsweise L=(4 bis 10)D, von der Stelle gemessen wird, an der die Gangtiefe G der Schnecke 2 abzunehmen beginnt, und/oder dass das zweite Druckmesssignal P₂ in einem Abstandsbereich von L=(0,1 bis 10)D, insbesondere L=(0,5 bis 5)D, vom strömungsabwärtigen Rand 9 der Beschickungsöffnung 11 gemessen wird, oder dass bei der Extrusion von teilkristallinen Materialien mit hohem Energieinhalt, z.B. Polyamiden, das erste Druckmesssignal P₁ in einem Abstand oder Bereich von L=(1 bis 20)D, insbesondere (5 bis 15)D, vom strömungsabwärtigen Rand 9 der Beschickungsöffnung 11 gemessen wird.

Die Länge L wird dabei ausgehend von dem stromabwärts gelegenen Rand 9 der Beschickungsöffnung 11 gemessen. Es zeigte sich, dass die Anordnung der Druckmesseinheit 7 in diesem Bereich eine gute Vergleichmäßigung der Beschickung durch den von den Gängen 5 der Schnecke geförderten eingebrachten Kunststoffmaterialien erreichen lässt, da diese Signale eine Tendenz für eine zu hohe oder eine zu niedrige Beschickung des Schneckengehäuses 1 erkennen lassen. Entsprechend erfolgt die Anordnung der Druckmesseinheit.

Insbesondere wird das zweite Druckmesssignal P₂ für eine rechtzeitige Analyse herangezogen bzw. könnte auch Notmaßnahmen einleiten, die erforderlich werden, wenn der Befüllungsgrad im Einzugsgebiet der Schnecke 2 als nicht ausreichend angesehen wird. Das zweite Druckmesssignal P₂ gibt ein rasches Signal in Hinblick auf eine ungleichmäßige Beschickung an, da mit dieser Druckmesseinheit Schüttdichtenänderungen des aufgegebenen Kunststoffmaterials gut und rasch erkennbar sind.

Die Art der Beschickungseinheit 13 kann beliebig sein. Es kann vorgesehen sein, dass die Beschickungseinheit 13 eine Absperreinheit umfasst, insbesondere einen von einem Stellglied bzw. Motor verstellbaren Schieber 8 oder eine verstellbare Blende, mit der der Querschnitt der Beschickungsöffnung 11 oder eines Füllstutzens in Abhängigkeit von den der Steuereinheit 4 zugeführten Druckmesssignalen P₁, P₂ veränderbar ist, so wie dies in der Zeichnung beispielsweise dargestellt ist.

Es kann ferner vorgesehen sein, dass als Beschickungseinheit 13 des Extruders S eine Förderschnecke oder eine Zellradschleuse vorgesehen sind, deren Abgabemenge insbesondere durch Steuerung bzw. Änderung ihrer Drehzahlen durch die Steuereinheit 4 veränderbar ist.

Um eine exakte Abgabe von Kunststoffmaterial aus der Beschickungseinheit 13 zu erreichen, kann, sofern eine Regelung mit einem Schieber erfolgt, eine elektronische Wegmessung bzw. elektronische Messung der Position des Schiebers vorgenommen werden, um die Durchtrittsöffnung exakt einstellen zu können. Ähnliches gilt für die Ansteuerung von Zellradschleusen, deren Öffnen und Schließen entsprechend überwacht bzw. angesteuert werden kann.

Die gemessenen Drucksignale P₁, P₂ können nach einer entsprechenden Vorverarbeitung, z.B. Filterung, der Steuereinheit 4 zugeführt bzw. dem PID-Regler ausgegeben werden.

Es zeigte sich, dass bei Anwendung der erfindungsgemäßen Vorgangsweise die Beschickung bzw. der Durchsatz an Kunststoffmaterial bzw. dessen Extrusion durch einen herkömmlichen Extruder gegenüber den bisherigen Durchsätzen erhöht werden konnte, da die Beschickung der Schnecke gleichmäßiger bzw. immer mit einem ausreichend hohen Beschickungsgrad erfolgen konnte. Dadurch konnten die Drehzahlen der Schnecken erhöht werden und der Durchsatz des Extruders gesteigert werden. Insbesondere eignet sich diese Vorgangsweise gut für die Aufbereitung von relativ sauberen Kunststoffmaterialien, die in Form von Flakes angeliefert werden.

Prinzipiell ist es möglich, das erfindungsgemäße Verfahren auch bei Extrudern mit mehreren Schnecken bzw. Doppelschneckenextrudern einzusetzen.

## Patentansprüche

1. Verfahren zur Extrusion von Kunststoffmaterial mit einem Schneckenextruder (S), wobei ein erster Druck (P₁) des zu extrudierenden Materials an zumindest einer Stelle im Einzugsbereich (EB) der zumindest einen Schnecke (2) im Aufschmelzbereich (A) des Gehäuses (1) gemessen wird, in welchem Aufsohmelzbereic das Kunststoffmaterial erweicht und noch nicht vollständig aufgeschmolzen vorliegt, wobei dass in Abhängigkeit des gemessenen ersten Druckes (P₁) Beschickungsmenge der Schnecke (2) eingeregelt wird,
- dass die erste Druckmesseinheit (6) In einem Bereich (A) der Schnecke (2) angeordnet wird, in dem der Kerndurchmesser (D) der Schnecke (2) sich zu erweitern und/oder die Gangtlefe (G) der Schnecke (2) abzunehmen beginnt, **dadurch gekennzeichnet,**
- **dass** ein zweiter Druck (P₂) zumindest an einer Stelle oder in einem Bereich im Gehäuse (1) im Einzugsgebiet (E) der Schnecke (2) ermittelt wird, in dem die Schnecke (2) einen gleichbleibenden Kerndurchmesser (D) besitzt, wobei der zweite Druck (P₂) an der Stelle oder in dem Bereich (E) des Gehäuses (1) gemessen wird, an der bzw. in dem das Kunststoffmaterial eine Temperatur besitzt, die seiner Vicat-Temperatur (T_{c}) ± 15% T_{c} entspricht, und
- **dass** das zweite Druckmesssignal (P₂), gegebenenfalls nach entsprechender Gewichtung zur Berücksichtigung von rasch erfolgenden Änderungen in der Beschickungsmenge, mit dem ersten Druckmesssignal (P₁) verknüpft wird und das erste und zweite Druckmesssignal gemeinsam zur Regelung der Beschickung des Extruders (S) und/oder Regelung der Drehzahl der Schnecke (2) herangezogen werden.

2. Verfahren nach Anspruch 1, **dadurch gekennzeichnet, dass** in Abhängigkeit des gemessenen ersten Druckes (P1) die Drehzahl der zumindest einen Schnecke (2) bemessen oder eingeregelt wird.

3. Verfahren nach Anspruch 1 oder 2, **dadurch gekennzeichnet, dass** der vom zu extrudierenden Material auf die Innenwandung des Gehäuses (1) ausgeübte Druck (P₁, P₂) gemessen wird, wobei die Messung des Drucks (P₁, P₂) im Nahbereich der oder an der Gehäuseinnenwandfläche (12) erfolgt.

4. Verfahren nach einem der Ansprüche 1 bis 3, **dadurch gekennzeichnet, dass** dem Extruder (S) zur Regeneration vorgesehenes Kunststoffmaterial aus einem Schneidverdichter oder Reaktor (R) oder einem Vorratsbehälter in Abhängigkeit des ersten Druckmesssignals (P₁) und gegebenenfalls des zweiten Druckmesssignals (P₂) mengenmäßig geregelt zugeführt wird und/oder dass dem Kunststoffmaterial vor der Extrusion Pigmente, Zuschlagsstoffe, Füllstoffe, Fasern, Weichmacher und/oder Bleichmittel zugesetzt werden.

5. Verfahren nach einem der Ansprüche 1 bis 4, **dadurch gekennzeichnet, dass** die Beschickungsmenge und/oder die Drehzahl der Schnecke (2) in Abhängigkeit des ersten und gegebenenfalls des zweiten Druckmesssignals (P₁, P₂) derart eingeregelt werden, dass im Gehäuse (1) ein konstanter Befüllungsgrad und/oder eine konstante Schüttdichte erreicht oder eingestellt werden und/oder bei Feststellung eines abnehmenden Druckes (P₁, P₂) die Beschickungsmenge erhöht und/oder die Drehzahl des Extruders (S) verringert wird.

6. Verfahren nach einem der Ansprüche 1 bis 5, **dadurch gekennzeichnet, dass** das erste Druckmesssignal (P₁), gegebenenfalls über einen Regler, einer Steuereinheit (4) zugeführt wird, mit der eine Beschickungseinheit (13) oder ein regelndes Stellglied oder ein Stellmotor (3) gesteuert werden.

7. Verfahren nach einem der Ansprüche 1 bis 6, **dadurch gekennzeichnet, dass**, insbesondere bei der Extrusion von Polyolefinen, das erste Druckmesssignal (P₁) in einem Bereich von L=(1 bis 16)D, vorzugsweise L=(4 bis 10)D, von der Stelle gemessen wird, an der die Gangtiefe (G) der Schnecke (2) abzunehmen beginnt, und/oder dass das zweite Druckmesssignal (P₂) in einem Abstandsbereich von L=(0,1 bis 10)D, insbesondere L=(0.5 bis 5)D, vom strömungsabwärtigen Rand (9) der Beschickungsöffnung (11) gemessen wird, oder dass bei der Extrusion von teilkristallinen Materialien mit hohem Energieinhalt, z.B. Polyamiden, das erste Druckmesssignal (P₁) in einem Abstand oder Bereich von L=(1 bis 20)D, vorzugsweise (5 bis 15)D, vom strömungsabwärtigen Rand (9) der Beschickungsöffnung (11) gemessen wird.

8. Extruder für Kunststoffmaterial mit zumindest einer in einem Gehäuse (1) rotierenden Schnecke (2) mit einer in das Gehäuse einmündenden Beschickungsöffnung (11) zur Materialaufgabe zur Durchführung des Verfahrens nach einem der Ansprüche 1 bis 7, wobei im Einzugsbereich (EB) der Schnecke (2) zumindest eine Druckmesseinheit (6, 7) zur Ermittlung eines vom aufgegebenen Material im Gehäuse (1) ausgeübten ersten Druckes (P₁) angeordnet ist, wobei dass die erste Druckmesseinheit (6) in einem Bereich (A) des Gehäuses (1) angeordnet ist, in dem das Kunststoffmaterial erweicht und noch nicht vollständig aufgeschmolzen vorliegt, nämlich in einem Bereich (A) der Schnecke (2) angeordnet ist, in dem der Kerndurchmesser (D) der Schnecke (2) sich zu erweitern und/oder die Gangtiefe (G) der Schnecke (2) abzunehmen beginnt, und dass die Druckmesssignale einer Steuereinheit (4) zugeführt sind, die in Abhängigkeit der Druckmesssignale (P₁) die Beschickungsmenge der Schnecke (2) einregelt **dadurch gekennzeichnet, dass** zumindest eine zweite Druckmesseinheit (7) an einer Stelle oder in einem Bereich (E) des Gehäuses (1) strömungsabwärts der Beschickungsöffnung (11) angeordnet ist, in dem die Schnecke (2) einen gleichbleibenden Kerndurchmesser (D) besitzt und/oder an welcher Stelle oder in welchem Bereich das Kunststoffmaterial eine Temperatur aufweist, die seiner Vicat-Temperatur (T_{c}) ± 15% T_{c} entspricht, und dass die jeweiligen Druckmesseinrichtungen (6, 7) an die Steuereinheit (4) angeschlossen sind, mit der eine vorgesehene Beschickungseinheit (13) des Extruders (S) und gegebenenfalls eine vorgesehene Antriebseinheit (15) der Schnecke (2) einregelbar sind.

9. Extruder nach Anspruch 8, **dadurch gekennzeichnet, dass** die Druckmesseinheit(en) (6, 7) im Bereich der oder an der Innenwandfläche (12) des Gehäuses (1) angeordnet ist (sind) und/oder dass die Druckmesssignale (P₁, P₂) der Druckmesseinrichtungen (6, 7) einer Steuereinheit (4) zugeführt sind, die an die Antriebseinheit (15) oder den Motor der Extruderschnecke (2) angeschlossen Ist und die Drehzahl der Antriebseinheit (15) oder des Motors regelt.

10. Extruder nach Anspruch 8 oder 9, **dadurch gekennzeichnet, dass** für die Extrusion von teilkristallinen Materialien mit hohem Energieinhalt, z.B. Polyamiden, die erste Druckmesseinheit (6) in einem Abstandsbereich von L=(1 bis 20)D, vorzugsweise L=(5 bis 15)D, vom strömungsabwärts liegenden Rand (9) der Beschickungsöffnung (11) angeordnet ist oder dass für die Extrusion von Polyolefinen die erste Druckmesseinheit (6) in einem Abstandsbereich von L=(1 bis 16)D, vorzugsweise L=(4 bis 10)D, vom strömungsabwärts liegenden Rand der Beschickungsöffnung (11) angeordnet ist und/oder dass die zweite Druckmesseinheit (7) in einem Abstandsbereich L=(0,1 bis 10)D, vorzugsweise L=(0,5 bis 5)D, vom strömungsabwärts liegenden Rand (9) der Beschickungsöffnung (11) angeordnet ist.

11. Extruder nach einem der Ansprüche 8 bis 10, **dadurch gekennzeichnet, dass** dem Extruder (S) eine Liefereinheit (14) für Kunststoffmaterial, z.B. ein Speicher oder ein Schneidverdichter oder Reaktor, vorgeschaltet ist und dass zwischen der Liefereinheit (14) und dem Extruder (S) die von der Steuereinheit (4) geregelte Beschickungseinheit (13) angeordnet ist und/oder die Beschickungseinheit (13) eine Absperreinheit umfasst, vorzugsweise eine(n) von einem Stellglied oder Motor (3) verstellbaren Schieber (8) oder verstellbare Blende, mit der der Querschnitt der Beschickungsöffnung (11) oder eines Füllstutzens in Abhängigkeit von den der Steuereinheit (4) zugeführten Druckmesssignalen veränderbar ist und/oder dass als Beschickungseinheit (13) des Extruders (S) eine Förderschnecke oder eine Zellradschleuse vorgesehen sind, deren Abgabemenge insbesondere durch Steuerung oder Änderung ihrer Drehzahl durch die Steuereinheit (4)veränderbar ist und/oder dass eine Materialaustragsleitung der Beschickungseinheit (13) direkt an die Beschickungsöffnung (11) des Gehäuses (1) der Schnecke (2) angeschlossen ist.

## Claims

1. A method for extruding plastic material by means of a screw extruder (S), wherein a first pressure (P₁) of the material to be extruded is measured in at least one location in the input section (EB) of the at least one screw (2) in the melting section (A) of the casing (1), in which melting section the plastic material is available in a softened and not yet completely melted state, wherein the charging volume of the screw (2) is adjusted depending on the first measured pressure (P₁), and
the first pressure measuring unit (6) is arranged in a section (A) of the screw (2) where the core diameter (D) of the screw (2) is beginning to enlarge and/or the channel depth (G) of the screw (2) is beginning to decrease,
**characterized in that**
- a second pressure (P₂) is determined at least in one location or in one area in the casing (1) in the input section (E) of the screw (2) where the screw (2) has a constant core diameter (D), wherein the second pressure (P₂) is measured in the location or the section (E) of the casing (1) where the plastic material has a temperature corresponding to the Vicat temperature thereof (T_{c}) ±15 % T_{c}, and
- the second pressure measurement signal (P₂), possibly after adequate weighting for taking into consideration rapidly occurring changes in the charging volume, is associated with the first pressure measurement signal (P₁), and the first and second pressure measurement signals are used together for regulating charging of the extruder (S) and/or regulating the rotational speed of the screw (2).

2. The method according to claim 1, **characterized in that** the rotational speed of the at least one screw (2) is dimensioned or adjusted depending on the first measured pressure (P₁).

3. The method according to claim 1 or 2, **characterized in that** the pressure (P₁, P₂) is measured which is applied against the inner wall of the casing (1) by the material to be extruded, wherein measuring of the pressure (P₁, P₂) is performed in proximity of the casing inner wall surface (12).

4. The method according to any of claims 1 to 3, **characterized in that** the plastic material provided for recycling is supplied to the extruder (S) in regulated quantities from a cutting compactor or reactor (R) or a storage container depending on the first pressure measurement signal (P₁) and possibly the second pressure measurement signal (P₂) and/or **in that** prior to extrusion, pigments, additives, fillers, fibers, softeners, and/or bleaching agents are added to the plastic material.

5. The method according to any of claims 1 to 4, **characterized in that** charging volume and/or the rotational speed of the screw (2) are adjusted depending on the first and possibly second pressure measurement signal (P₁, P₂) so that inside the casing (1) a constant filling factor and/or a constant bulk density is achieved or adjusted and/or when a decreasing pressure (P₁, P₂) is determined, the charging volume is increased and/or the rotational speed of the extruder (S) is decreased.

6. The method according to any of claims 1 to 5, **characterized in that** the first pressure measurement signal (P₁), is supplied, possibly via a controller, to a control unit (4) by which a charging unit (13) or a regulating actuator or servomotor (3) is driven.

7. The method according to any of claims 1 to 6, **characterized in that** in particular when extruding polyolefins, the first pressure measurement signal (P₁ is measured in a range of L=(1 to 16)D, preferably L=(4 to 10)D, in the location where the channel depth (G) of the screw (2) is beginning to decrease, and/or **in that** the second pressure measurement signal (P₂) is measured in a distance range of L=(0.1 to 10)D, in particular L=(0.5 to 5)D, from the downstream edge (9) of the charging opening (11), or **in that** when extruding semi-crystalline materials with high energy content, e.g. polyamides, the first pressure measurement signal (P₁) is measured at a distance or in a range of L=(1 to 20) D, in particular (5 to 15)D, from the downstream edge (9) of the charging opening (11).

8. An extruder for plastic material, comprising at least one screw (2) rotating inside a casing (1) having a charging opening (11) opening into the casing for material feeding for performing the method according to claims 1 to 7, wherein in the input section (EB) of the screw (2) at least one pressure measuring unit (8, 7) is arranged for determining a first pressure (P₁) applied inside the casing (1) by the material fed, wherein the first pressure measuring unit (6) is arranged in a section (A) of the casing (1) where the plastic material is available in a softened and not yet completely melted state, namely in a section (A) of the screw (2) where the core diameter (D) of the screw (2) is beginning to increase and/or the channel depth (G) of the screw (2) is beginning to decrease, and wherein the pressure measurement signals are supplied to a control unit (4) adjusting the charging volume of the screw (2) depending on the pressure measurement signal (P₁), **characterized in that** at least one second pressure measuring unit (7) is arranged in a location or section (E) of the casing (1) downstream of the charging opening (11) where the screw (2) has a constant core diameter (D) and/or in said location or said section the plastic material has a temperature corresponding to the Vicat temperature (T_{c}) ±15 % T_{c} thereof, and **in that** the respective pressure measuring devices (6, 7) are connected to the control unit (4) which allows for adjusting a provided charging unit (13) of the extruder (S) and possibly a provided drive unit (15) of the screw (2).

9. The extruder according to claim 8, **characterized in that** the pressure measuring unit(s) (6, 7) are arranged in the area of or against the inner wall surface (12) of the casing (1), and/or **in that** the pressure measurement signals (P₁, P₂) of the pressure measuring devices (6, 7) are supplied to a control unit (4) which is connected to the drive unit (15) or the motor of the extruder screw (2) and regulates the rotational speed of the drive unit (15) or motor.

10. The extruder according to claim 8 or 9, **characterized in that** when extruding semi-crystalline materials with high energy content, e.g. polyamides, the first pressure measurement unit (6) is arranged in a distance range of L=(1 to 20)D, preferably L=(5 to 15)D, from the downstream edge (9) of the charging opening (11), or **in that** when extruding polyolefins, the first pressure measuring unit (6) is arranged in a distance range of L=(1 to 16)D, preferably L=(4 to 10)D from the downstream edge of the charging opening (11), and/or **in that** the second pressure measuring unit (7) is arranged in a distance range L=(0.1 to 10)D, preferably L=(0.5 to 5)D, from the downstream edge (9) of the charging opening (11).

11. The extruder according to any of claims 8 to 10, **characterized in that** a delivery unit (14) for plastic material, e.g. a storage bin or a cutting compactor or reactor, is placed upstream of the extruder (S), and **in that** between the delivery unit (14) and the extruder (S), the charging unit (13) regulated by the control unit (4) is arranged and/or the charging unit (13) comprises a locking unit, in particular a slider (8) or adjustable cover which can be adjusted by an actuator or motor (3) and can change the cross-section of the charging opening (11) or a filling port depending on the pressure measurement signals supplied to the control unit (4), and/or **in that** as a charging unit (13) of the extruder (S), a transport screw or rotary feeder is provided the output volume of which can be changed by the control unit in particular by controlling or changing the rotational speed thereof, and/or **in that** a material discharging duct of the charging unit (13) is directly connected to the charging opening (11) of the casing (1) of the screw (2).

## Revendications

1. Procédé d'extrusion de matière plastique au moyen d'une extrudeuse à vis (S), dans lequel une première pression (P₁) de la matière à extruder est mesurée à au moins un endroit dans la zone d'entrée (EB) de ladite au moins une vis (2) dans la zone de fusion (A) du carter (1), zone de fusion dans laquelle la matière plastique est présente sous forme ramollie et pas encore entièrement fondue, dans lequel le volume de chargement de la vis (2) est réglé en fonction de la première pression (P₁) mesurée, and
la première unité de mesure de pression (6) est agencée dans une zone (A) de la vis (2) dans laquelle le diamètre du noyau (D) de la vis (2) commence à s'élargir et/ou la profondeur de spire (G) de la vis (2) commence à diminuer,
**caractérisé en ce que**
- une deuxième pression (P₂) est déterminée au moins à un endroit ou dans une zone dans le carter (1) dans la zone d'entrée (E) de la vis (2) où la vis (2) présente un diamètre du noyau (D) constant, la deuxième pression (P₂) étant mesurée à un endroit ou dans la zone (E) du carter (1) où la matière plastique présente une température qui correspond à sa température de Vicat (T_{c}) ±15 % T_{c}, et
- le deuxième signal de mesure de pression (P₂), éventuellement après une pondération adéquate pour prendre en compte des changements survenant rapidement au niveau du volume de charge, est associé au premier signal de mesure de pression (P₁), et les premier et deuxième signaux de mesure de pression sont utilisés ensemble pour réguler le chargement de l'extrudeuse (S) et/ou réguler la vitesse de rotation de la vis (2).

2. Procédé selon la revendication 1, **caractérisé en ce que** la vitesse de rotation de ladite au moins une vis (2) est dimensionnée ou réglée en fonction de la première pression (P₁) mesurée.

3. Procédé selon la revendication 1 ou 2, **caractérisé en ce que** la pression (P₁, P₂) exercée sur la paroi intérieure du carter (1) par la matière à extruder est mesurée, ladite mesure de la pression (P₁, P₂) étant effectuée à proximité de la surface de paroi intérieure (12) du carter.

4. Procédé selon l'une quelconque des revendications 1 à 3, **caractérisé en ce que** la matière plastique prévue pour le recyclage est fournie à l'extrudeuse (S) à partir d'un compacteur à couteaux ou d'un réacteur (R) ou d'un réservoir en quantité régulée en fonction du premier signal de mesure de pression (P₁) et le cas échéant du deuxième signal de mesure de pression (P₂) et/ou **en ce qu'**avant l'extrusion, des pigments, des additifs, des matières de remplissage, des fibres, des plastifiants et/ou des décolorants sont ajoutés à la matière plastique.

5. Procédé selon l'une quelconque des revendications 1 à 4, **caractérisé en ce que** le volume de chargement et/ou la vitesse de rotation de la vis (2) sont réglés en fonction du premier et le cas échéant du deuxième signal de mesure de pression (P₁, P₂) de telle sorte qu' à l'intérieur du carter (1) un facteur de remplissage constant et/ou une densité apparente constante est atteint(e) ou réglé(e) et/ou quand une pression décroissante (P₁, P₂) est déterminée, le volume de chargement est relevé et/ou la vitesse de rotation de l'extrudeuse (S) est réduite.

6. Procédé selon l'une quelconque des revendications 1 à 5, **caractérisé en ce que** le premier signal de mesure de pression (P₁) est fourni, le cas échéant par un régulateur, à une unité de commande (4) par laquelle une unité de chargement (13) ou un actionneur régulateur ou un servomoteur (3) est excité(e).

7. Procédé selon l'une quelconque des revendications 1 à 6, **caractérisé en ce qu'**en particulier pour l'extrusion de polyoléfines, le premier signal de mesure de pression (P₁) est mesuré dans une plage de L=(1 à 16) D, de préférence L=(4 à 10) D, à l'endroit où la profondeur de spire (G) de la vis (2) commence à diminuer, et/ou **en ce que** le deuxième signal de mesure de pression (P₂) est mesuré dans une plage de distance de L=(0,1 à 10)D, en particulier L=(0,5 à 5)D, par rapport au bord aval (9) de l'ouverture de chargement (11), ou **en ce que** pour l'extrusion de matières semi-cristallines à haute teneur énergétique, par exemple des polyamides, le premier signal de mesure de pression (P₁) est mesuré à une distance ou dans une plage de L=(1 à 20)D, en particulier (5 à 15)D, par rapport au bord aval (9) de l'ouverture de chargement (11).

8. Extrudeuse pour matière plastique, comprenant au moins une vis (2) tournant à l'intérieur d'un carter (1) avec une ouverture de chargement (11) qui débouche à l'intérieur du carter pour l'alimentation en matière, destinée à effectuer le procédé selon les revendications 1 à 7, dans laquelle, dans la zone d'entrée (EB) de la vis (2), au moins une unité de mesure de pression (6, 7) est agencée pour déterminer une première pression (P₁) exercée par la matière alimentée à l'intérieur du carter (1), dans laquelle la première unité de mesure de pression (6) est agencée dans une zone (A) du carter (1) où la matière plastique est présente à l'état ramolli et pas encore complètement fondu, notamment dans une zone (A) de la vis (2) où le diamètre du noyau (D) de la vis (2) commence à augmenter et/ou la profondeur de spire (G) de la vis (2) commence à diminuer, et dans laquelle les signaux de mesure de pression sont fournis à une unité de commande (4) réglant le volume de chargement de la vis (2) en fonction du signal de mesure de pression (P₁), **caractérisée en ce qu'**au moins une deuxième unité de mesure de pression (7) est agencée à un endroit ou dans une zone (E) du carter (1) en aval de l'ouverture de chargement (11) où la vis (2) présente un diamètre du noyau constant (D) et/ou audit endroit ou dans ladite zone où la matière plastique présente une température correspondant à sa température de Vicat (T_{c}) ±15 % T_{c}, et **en ce que** les dispositifs de mesure de pression (6, 7) respectifs sont connectés à l'unité de commande (4) qui permet de régler une unité de chargement (13) prévue de l'extrudeuse (S) et le cas échéant une unité d'entraînement (15) prévue de la vis (2).

9. Extrudeuse selon la revendication 8, **caractérisée en ce que** la ou les unité(s) de mesure de pression (6, 7) est/sont agencée(s) dans la zone de la surface de paroi intérieure (12) du carter (1) ou contre celle-ci, et/ou **en ce que** les signaux de mesure de pression (P₁, P₂) des dispositifs de mesure de pression (6, 7) sont fournis à une unité de commande (4) qui est connectée à l'unité d'entraînement (15) ou au moteur de la vis d'extrudeuse (2) et régule la vitesse de rotation de l'unité d'entraînement (15) ou du moteur.

10. Extrudeuse selon la revendication 8 ou 9, **caractérisée en ce que** pour l'extrusion de matières semi-cristallines à haute teneur énergétique, par exemple des polyamides, la première unité de mesure de pression (6) est agencée dans une plage de distance de L=(1 à 20)D, de préférence L=(5 à 15)D, par rapport au bord aval (9) de l'ouverture de chargement (11), ou **en ce que** pour l'extrusion de polyoléfines, la première unité de mesure de pression (6) est agencée dans une plage de distance de L=(1 à 16) D, de préférence L=(4 à 10)D par rapport au bord aval de l'ouverture de chargement (11), et/ou **en ce que** la deuxième unité de mesure de pression (7) est agencée dans une plage de distance de L=(0,1 à 10)D, de préférence L=(0,5 à 5)D, par rapport au bord aval (9) de l'ouverture de chargement (11).

11. Extrudeuse selon l'une quelconque des revendications 8 à 10, **caractérisée en ce qu'**une unité d'approvisionnement (14) pour la matière plastique, par exemple un réservoir ou un compacteur à couteaux ou un réacteur, est placée en amont de l'extrudeuse (S), et **en ce qu'**entre l'unité d'approvisionnement (14) et l'extrudeuse (S) est agencée l'unité de chargement (13) régulée par l'unité de commande (4) et/ou l'unité de chargement (13) comprend une unité de blocage, en particulier un poussoir (8) ou un obturateur réglable qui peut être réglé par un actionneur ou moteur (3) et permet de modifier la section transversale de l'ouverture de chargement (11) ou d'un raccord de remplissage en fonction des signaux de mesure de pression fournis à l'unité de commande (4), et/ou **en ce que** comme unité de chargement (13) de l'extrudeuse (S), une vis sans fin ou un sas rotatif est prévu(e) dont le volume de sortie peut être modifié par l'unité de commande en particulier en commandant ou en modifiant sa vitesse de rotation, et/ou **en ce qu'**une conduite de déchargement de matière de l'unité de chargement (13) est connectée directement à l'ouverture de chargement (11) du carter (1) de la vis (2).
